# EUROPEAN PATENT SPECIFICATION

(11) **EP 4 044 515 B1**
(45) Date of publication and mention of the grant of the patent: **31.07.2024**
(21) Application number: 20888423.9
(22) Date of filing: 21.09.2020
(51) Int. Cl.: H04L 41/5051

(54) **METHOD, DEVICE AND SYSTEM FOR REALIZING BUSINESS FUNCTION DEPLOYMENT**
VERFAHREN, VORRICHTUNG UND SYSTEM ZUR REALISIERUNG DES EINSATZES EINER GESCHÄFTSFUNKTION
PROCÉDÉ, DISPOSITIF ET SYSTÈME POUR RÉALISER UN DÉPLOIEMENT DE FONCTION D'ENTREPRISE

(30) Priority: 11.11.2019 CN 201911096526
(43) Date of publication of application: 17.08.2022
(73) Proprietor: Huawei Technologies Co., Ltd., Shenzhen, Guangdong 518129 (CN)
(72) Inventor: WU, Hao, Shenzhen, Guangdong 518129 (CN); WANG, Chuntao, Shenzhen, Guangdong 518129 (CN); LU, Kai, Shenzhen, Guangdong 518129 (CN); WANG, Jianbing, Shenzhen, Guangdong 518129 (CN)
(74) Representative: MERH-IP Matias Erny Reichl Hoffmann Patentanwälte PartG mbB
(86) International application number: PCT/CN2020/116490
(87) International publication number: WO 2021/093458

(56) References cited:
- EP-A1- 3 418 901
- WO-A1-2017/035735
- CN-A- 104 580 338
- CN-A- 109 102 200
- US-A1- 2018 316 551
- US-A1- 2018 322 365
- US-A1- 2019 295 282
- OPPO ET AL: "SID Proposal: Study on AI/ML Model Transfer in 5GS", vol. SA WG1, no. Reno, USA; 20191118 - 20191122, 8 November 2019 (2019-11-08), XP051822343, Retrieved from the Internet <URL:https://ftp.3gpp.org/tsg_sa/WG1_Serv/TSGS1_88_Reno/Docs/S1-193040.zip S1-193040_SID_AMMT v8.1.doc> [retrieved on 20191108]

## Description

### TECHNICAL FIELD

Embodiments of the present invention relate to the fields of communications technologies and artificial intelligence (AI), and in particular, to a method, an apparatus, and a system for implementing service function deployment.

### BACKGROUND

To enhance reliability of implementing a network service in a communications system, an active/standby working manner is usually used. One of a plurality of apparatuses in the communications system serves as an active apparatus for the network service, and one or more other apparatuses serve as a standby apparatus for the network service. For example, when a firewall service is implemented by using a device cluster, one device in the device cluster serves as an active device for the firewall service, and one or more other devices serve as a standby device for the firewall service. For another example, when a conventional network service such as protocol processing, route calculation, security authentication, or user access is implemented by using a network device including a plurality of main processing units (MPU), one of the MPUs serves as an active MPU for the network service, and one or more other MPUs serve as a standby MPU for the network service.

Applying data processing services such as an AI service to a network has become a popular development direction in the field of communications technologies. When a data processing service is implemented by using a communications system working in an active/standby manner, the data processing service is usually implemented by using an active apparatus in the communications system.

The data processing service usually involves storage and statistical analysis of a large amount of data, and requires a large amount of computing resources and storage resources. In this manner, the data processing service is implemented with relatively low efficiency.

US 2018/322365 A1 discloses a highly-parallel general-purpose graphics processing unit (GPGPU), wherein the GPGPU can be linked directly to other instances of the GPGPU to create a multi-GPU cluster, and the multiple instances of the GPGPU can be configured to operate as a compute cluster. While the GPGPU can be configured to train neural networks, it is disclosed an alternate configuration of the GPGPU that can be configured for deployment within a high performance or low power inferencing platform. In an inferencing configuration, the GPGPU includes fewer of the compute clusters relative to the training configuration.

EP 3 418 901 A1 discloses an expansion card that may include a printed circuit board and a hardware accelerator that is disposed on the printed circuit board. The hardware accelerator may include application-specific hardware circuitry designed to perform a computing task. The hardware accelerator may also offload a portion of the computing task from a central processing unit of a computing device by executing, via the application-specific hardware circuitry, the portion of the computing task.

US 2019/295282 A1 discusses stereo depth estimation using deep neural networks.

Document OPPO ET AL: "SID Proposal: Study on AI/ML Model Transfer in 5GS", 3GPP DRAFT; S1 - 193040, XP051822343 discusses potential service requirements for 5G system support of AI/ML model distribution and transfer.

### SUMMARY

Embodiments of the present invention provide a system, a method, an apparatus, a computer program product and a computer-readable storage medium according to claims 1, 8,11,12,13, respectively, , for implementing service function deployment, to resolve a prior-art problem of relatively low efficiency of implementing a data processing service by using a communications system working in an active/standby manner. Further embodiments are disclosed in the dependent claims.

Beneficial effects brought by the technical solutions provided in this application include at least the following: The second service may be implemented by using an idle resource of the standby apparatus for the first service, to effectively ensure efficiency of implementing the second service. In addition, contention with the first service for a resource of the active apparatus may be avoided, thereby ensuring efficiency of implementing the first service by using the active apparatus.

### BRIEF DESCRIPTION OF DRAWINGS

To describe the technical solutions of the present invention more clearly, the following briefly describes the accompanying drawings.
FIG. 1 is a schematic diagram of a networking structure of a communications system 100 according to an embodiment of the present invention;
FIG. 2 is a schematic diagram of a function module of an AI service;
FIG. 3 is another schematic diagram of a networking structure of a communications system 100;
FIG. 4A to FIG. 4D, FIG. 5A, and FIG. 5B are schematic diagrams of a function module deployment manner;
FIG. 6A, FIG. 6B(1), and FIG. 6B(2) are schematic flowcharts of a method 100;
FIG. 7 is a schematic diagram of a deployment relationship between a function module and an apparatus;
FIG. 8 is a schematic diagram of a structure of an apparatus 200; and
FIG. 9 is a schematic diagram of a structure of an apparatus 1000.

### DESCRIPTION OF EMBODIMENTS

The following describes embodiments and examples for understanding the present invention with reference to accompanying drawings.

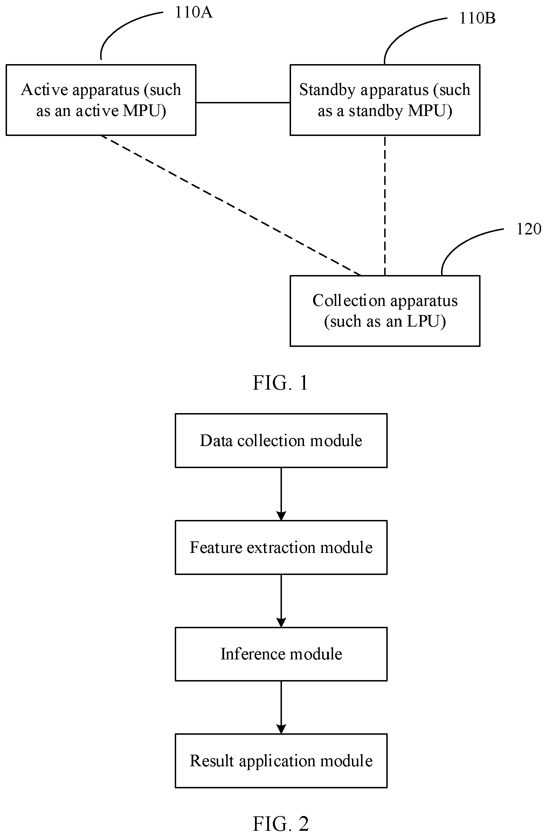

FIG. 1 is a schematic diagram of a networking structure of a communications system 100 according to an embodiment of the present invention. The communications system 100 includes at least two apparatuses 110. An apparatus 110A is an active apparatus for a first service and is configured to perform a function of the first service. An apparatus 110B is a standby apparatus for the first service. The first service may be specifically a conventional network service such as a firewall, protocol processing, route calculation, security authentication, or user access.

The communications system 100 is further configured to perform a function of a second service. The second service may include only one function module, and the function module may be deployed on the standby apparatus 110B. The second service according to the present invention includes a plurality of function modules, and some or all of the function modules may be deployed on the standby apparatus 110B. The active apparatus 110A deploys some or all of the function modules for the second service on the standby apparatus 110B.

The second service is usually a data processing service, usually includes a data processing module, and may further include other function modules such as a data collection module and a result application module. The data collection module is configured to collect data (referred to as raw data) required by the second service, and send the raw data to the data processing module. The data processing module is configured to process the raw data, and send a processing result to the result application module. The result application module applies the processing result. The data processing module may be deployed on the standby apparatus 110B. If the data processing module includes a plurality of submodules, some submodules may be deployed on the standby apparatus 110B, and other submodules are deployed on another apparatus (such as the active apparatus 110A). The data collection module may be deployed on the active apparatus 110A, or may be deployed on an apparatus other than the apparatus 110, such as an apparatus 120 shown in FIG. 1 (referred to as a collection apparatus). The collection apparatus may be an apparatus in the communications system 100, or may be an apparatus outside the communications system 100. The result application module may be deployed on the active apparatus 110A or the standby apparatus 110B.

The second service may be specifically an AI service, an access service, a security protection service, an operation and maintenance task, or the like. The second service according to the present invention is an AI service.

The AI service may be specifically AI-based application identification, AI-based key performance indicator (KPI) time series anomaly detection, or the like.

The access service may be specifically used for user authentication, roaming identification, and the like. For this type of service, the data collection module is configured to collect information for service access processing, such as a mobile phone number of a user and a location of a user, and the data processing module is configured to process the collected data, for example, perform user authentication and roaming identification based on the collected data.

The security protection service may be specifically CPU attack defense packet preprocessing. For example, the first service running on the active apparatus is a central processing unit (CPU) attack defense service. To perform the first service, a packet needs to be preprocessed, and packet preprocessing needs to occupy a large amount of computing resources and storage resources. Packet preprocessing may become an independent service, and some or all of function modules for the service are deployed on the standby apparatus for implementation. The standby apparatus returns a packet preprocessing result to the active apparatus, so that the active apparatus further performs the first service based on the packet preprocessing result. For this type of service, the data collection module is configured to collect a required packet, and the data processing module is specifically configured to preprocess the packet.

The operation and maintenance service may be specifically preventive maintenance data collection. For this type of service, the data collection module is configured to collect preventive maintenance data, and the data processing module is configured to preprocess, such as removing noise from, and save the collected preventive maintenance data.

When the second service is specifically an AI service, the data processing module is usually divided into a feature extraction module and an inference module. With reference to FIG. 2, the following describes functions of each included function module when the second service is an AI service.

The data collection module is configured to collect raw data required by the second service, and send the raw data to the feature extraction module. For example, if the second service is KPI time series anomaly detection, the data required by the second service includes a KPI time series (such as a packet loss rate time series or a delay time series). It should be noted that, before sending the raw data to the feature extraction module, the data collection module may further preprocess the raw data, for example, remove noise from the raw data, and send preprocessed raw data to the feature extraction module.

The feature extraction module is configured to extract a feature of the raw data to obtain feature data, for example, a statistical feature, a fitting feature, and/or a frequency domain feature of each KPI time series, and send the feature data to the inference module.

The inference module is configured to draw an inference based on the feature data, for example, draw an inference about whether each KPI time series is abnormal, and send an inference result to the result application module. The inference module may specifically draw an inference by using a pre-trained anomaly detection model.

The result application module applies the inference result, for example, displays the inference result, gives an alarm based on the inference result, and makes further detection based on the inference result (such as fault detection based on a KPI time series anomaly), or sends the inference result (such as to an apparatus other than the apparatus to which the result application module belongs, or to another module of the apparatus to which the result application module belongs).

The foregoing function modules have the following characteristics:

The data collection function needs to save a large amount of data, thereby occupying a relatively large amount of storage resources.

The feature extraction module needs to save or process a relatively large amount of data, thereby occupying a large amount of storage resources and computing resources.

The inference module needs to process a relatively large amount of data with a strict requirement for time, thereby occupying a large amount of computing resources (usually more than the feature extraction module).

The result application module usually needs to interact with another entity (such as another apparatus or another module located on the same apparatus), thereby occupying a relatively small amount of storage resources and computing resources.

In addition, the second service may further include a training function, to train an inference model (such as an anomaly detection model) used for drawing an inference. In this case, the training function may be implemented by using the inference module, or the training function may be implemented by using an independent training module. The training module also occupies a relatively large amount of computing resources.

The system 100 may be specifically a device cluster, for example, a firewall cluster. The active apparatus 110A is specifically an active device, and the standby apparatus 110B is specifically a standby device.

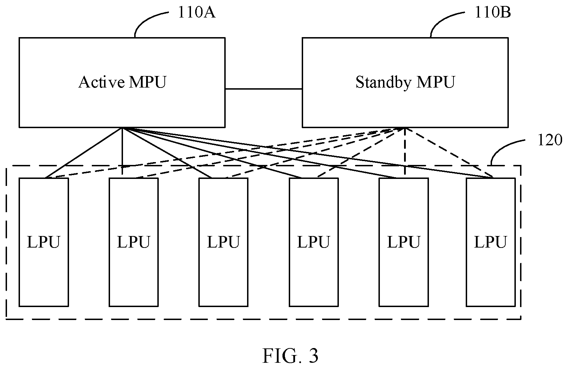

The system 100 may be specifically a network device shown in FIG. 3. The network device includes a plurality of cards, among them, at least two MPUs, n LPUs (n is a natural number), and the like. The MPU is used for system management, control protocol processing, and the like. The LPU is used for distributed packet forwarding, policy execution, and the like, and provides a network interface.

In the network device, the apparatus 110 is specifically an MPU, and works in an active/standby manner. The active apparatus 110A is specifically an active MPU, and the standby apparatus 110B is specifically a standby MPU. The collection apparatus 120 is specifically an LPU.

The network device may be specifically a switch, a router, a broadband remote access server (BRAS), an access controller (AC), or the like.

The network device is typically an embedded device with limited storage and computing resources. In addition, during network device design, only communication requirements such as data packet forwarding and communications protocol packet interaction are considered, and storage and computing resources are not reserved for an added data processing service such as AI.

Each card in the network device has the following characteristics:
An active MPU is configured to run the first service with insufficient computing and storage resources.

A standby MPU is equipped with same resources as an active MPU but usually remains in an idle state.

An LPU can facilitate collection of various types of data.

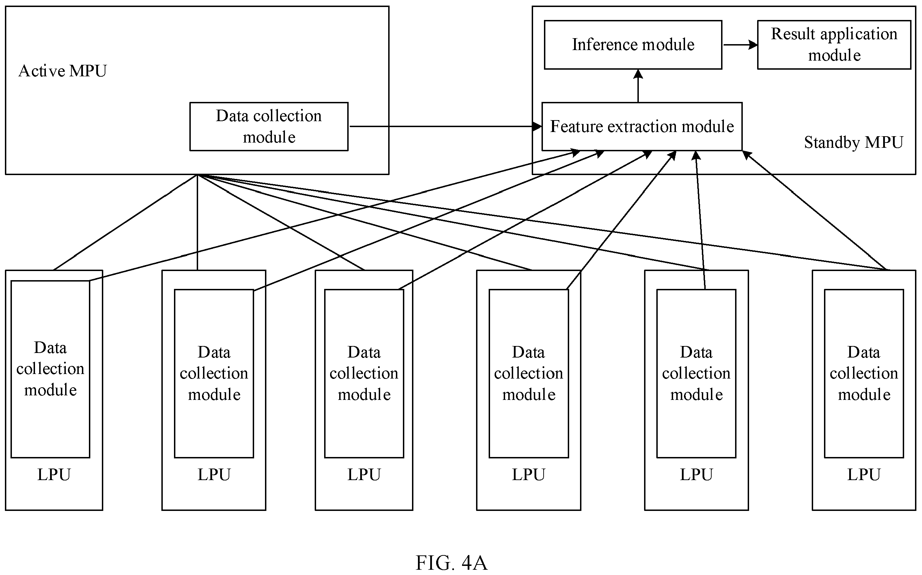

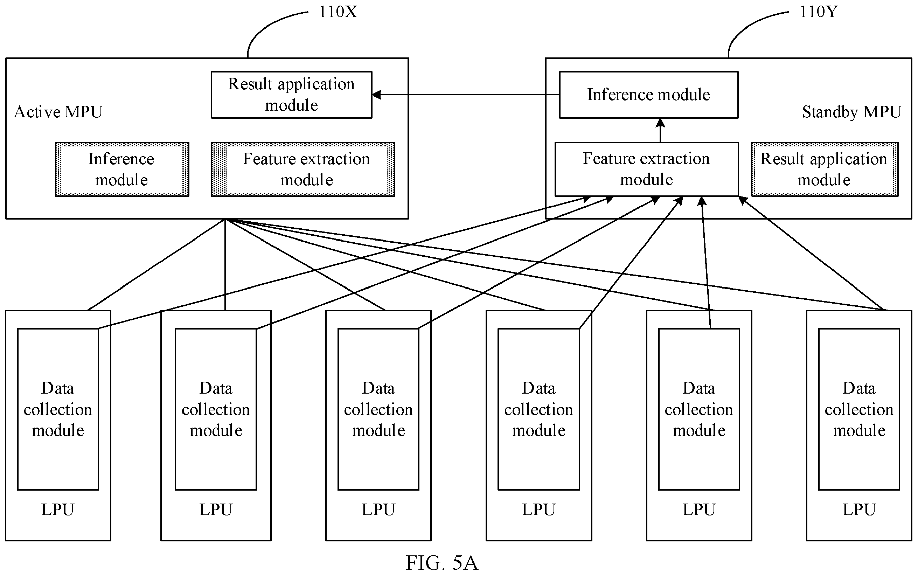

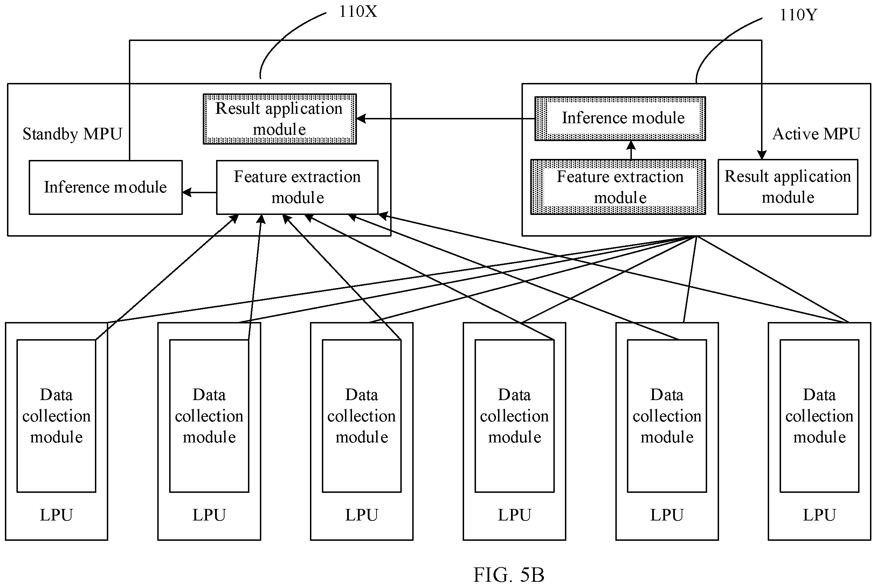

By using an example in which the communications system 100 is the network device shown in FIG. 3 and the second service is an AI service below, deployment manners of function modules for the second service are described with reference to FIG. 4A to FIG. 4D, FIG. 5A, and FIG. 5B.

In each deployment manner, the data collection module is deployed on an apparatus that needs to collect data required by the second service, for example, on an active MPU and/or an LPU. In the deployment manners shown in FIG. 4A to FIG. 4D, it is assumed that both the active MPU and the LPU need to collect data required by the second service. Correspondingly, the data collection module is deployed on both the active MPU and the LPU. In the deployment manners shown in FIG. 5A and FIG. 5B, it is assumed that only the LPU needs to collect data required by the second service. The deployment manners of other function modules are described as follows:
The inference module may be deployed on the standby MPU. Because the inference module occupies a relatively large amount of computing resources, deploying the inference module on the standby MPU can use an idle resource of the standby MPU to ensure execution efficiency of the second service. If the second service further includes a training module independent of the inference module, because the training module also occupies a relatively large amount of computing resources, both the training module and the inference module may be deployed on the standby MPU.

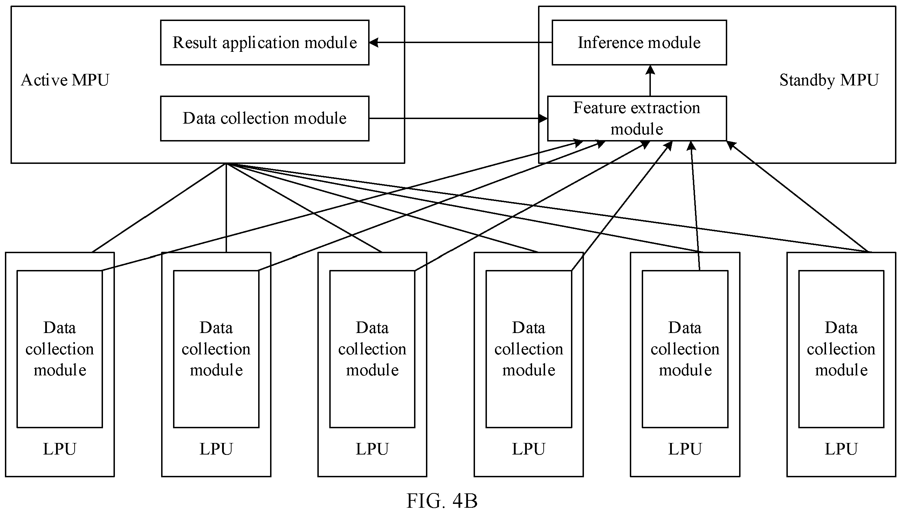

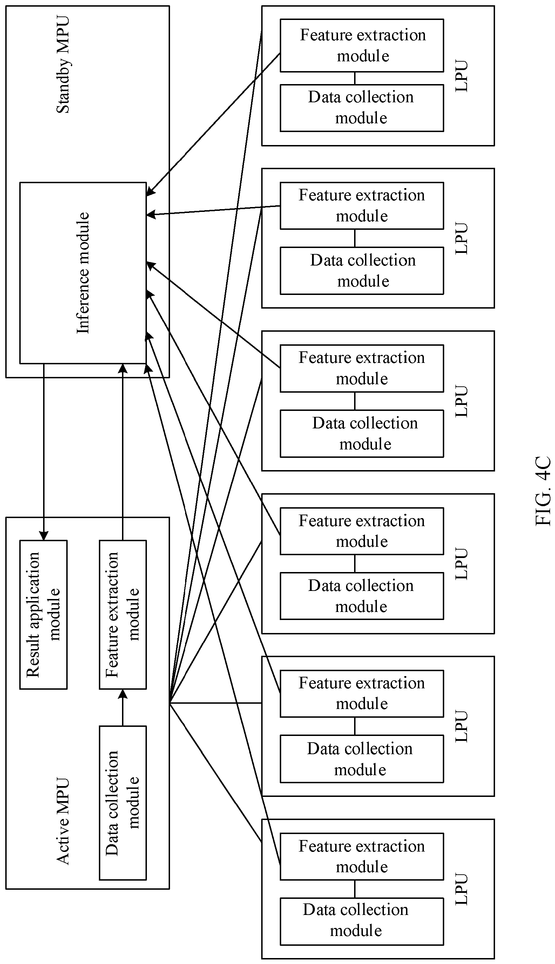

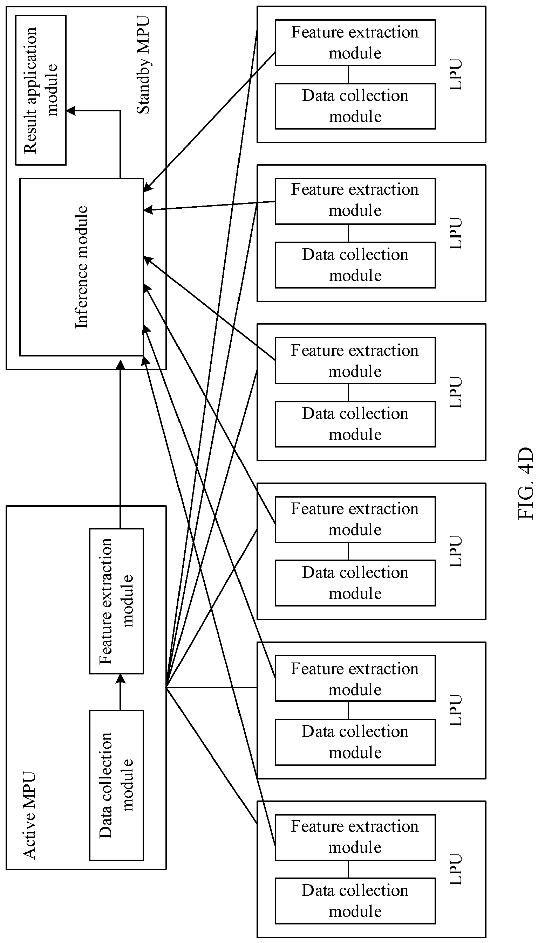

The result application module may be deployed on the active MPU or the standby MPU. If the result application module needs to send the inference result or a processing result obtained by performing further processing based on the inference result to another entity, a location relationship between the another entity and the active MPU or the standby MPU may be considered when a deployment location of the result application module is determined. For example, if the result application module needs to send the inference result or the processing result to another apparatus communicating with the active MPU, or to another module (such as a module processing the first service) on the active MPU, the result application module may be deployed on the active MPU. If the result application module needs to send the inference result or the processing result to another apparatus communicating with the standby MPU, the result application module may be deployed on the standby MPU. In the deployment manners shown in FIG. 4B and FIG. 4C, the result application module is deployed on the active MPU, and in the deployment manners shown in FIG. 4A and FIG. 4D, the result application module is deployed on the standby MPU.

The feature extraction module may be deployed on the standby MPU, to fully use an idle resource of the standby MPU, or may be deployed on an apparatus (such as the active MPU or the LPU) accommodating the data collection module, and the apparatus accommodating the data collection module needs to transmit only the extracted feature data to the standby MPU, without needing to transmit the raw data, thereby greatly reducing a communications bandwidth requirement for communication between the apparatus and the standby MPU.

As shown in FIG. 4A, the feature extraction module, the inference module, and the result application module may be all deployed on the standby MPU. Correspondingly, the apparatuses on which the data collection module is deployed collect the raw data by using the data collection apparatus, and send the raw data to the standby MPU. The standby MPU extracts a feature of the raw data by using the feature extraction module to obtain feature data, draws an inference based on the feature data by using the inference module, and then applies an inference result by using the result application module.

As shown in FIG. 4B, both the feature extraction module and the inference module may be deployed on the standby MPU, and the result application module may be deployed on the active MPU. Correspondingly, the apparatuses on which the data collection module is deployed collect the raw data by using the data collection apparatus, and send the raw data to the standby MPU. The standby MPU extracts a feature of the raw data by using the feature extraction module to obtain feature data, draws an inference based on the feature data by using the inference module, and sends an inference result to the active MPU. The active MPU applies the inference result by using the result application module.

As shown in FIG. 4C, the inference module may be deployed on the standby MPU, the result application module may be deployed on the active MPU, and the feature extraction module may be deployed on the apparatuses (the active MPU and the LPU) accommodating the data collection module. Correspondingly, the apparatuses accommodating the data collection module collect the raw data by using the data collection apparatus, extract a feature of the raw data by using the feature extraction module in the apparatus to obtain feature data, and send the feature data to the standby MPU. The standby MPU draws an inference based on the feature data by using the inference module, and sends an inference result to the active MPU. The active MPU applies the inference result by using the result application module.

As shown in FIG. 4D, both the inference module and the result application module may be deployed on the standby MPU, and the feature extraction module is deployed on the apparatuses (the active MPU and the LPU) accommodating the data collection module. Correspondingly, the apparatuses accommodating the data collection module collect the raw data by using the data collection apparatus, extract a feature of the raw data by using the feature extraction module in the apparatus to obtain feature data, and send the feature data to the standby MPU. The standby MPU draws an inference based on the feature data by using the inference module, and applies an inference result by using the result application module.

In addition, based on the various deployment manners, to improve reliability of the second service, an active/standby deployment manner may be further used for the second service. A function module deployed in the foregoing implementation serves as an active function module. An active function module deployed on the standby MPU is also deployed on the active MPU and serves as a standby function module, and an active function module deployed on the active MPU is also deployed on the standby MPU and serves as a standby function module. When the second service is running, only the active function module is started, and the standby function module is not started. The following describes the active/standby deployment manner of the second service with reference to FIG. 5A and FIG. 5B. In FIG. 5A and FIG. 5B, a colorless function module is an active function module, and a gray function module is a standby function module.

As shown in FIG. 5A and FIG. 5B, the feature extraction module, the inference module, and the result application module are all deployed on the active MPU and the standby MPU. When the second service is running, only the result application module deployed on the active MPU and the feature extraction module and the inference module that are deployed on the standby MPU are started.

As shown in FIG. 5A, an MPU 110X is an active MPU, and an MPU 110Y is a standby MPU. A result application module deployed on the MPU 110X, and a feature extraction module and an inference module that are deployed on the MPU 110Y are started. After the MPUs make an active/standby switch, the MPU 110Y is an active MPU, and the MPU 110X is a standby MPU. As shown in FIG. 5B, a result application module deployed on the MPU 110Y and a feature extraction module and an inference module that are deployed on the MPU 110X are started.

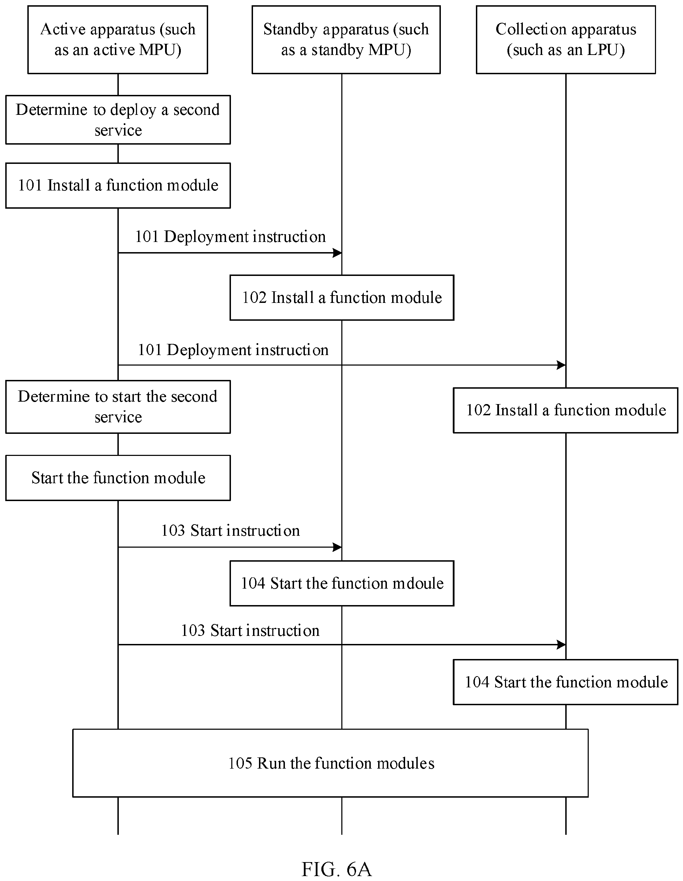

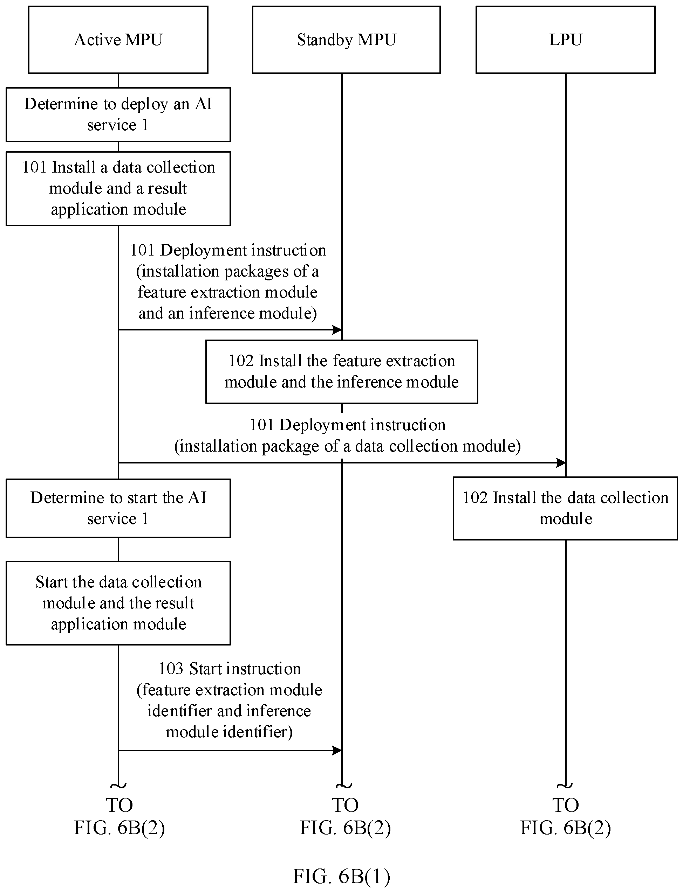

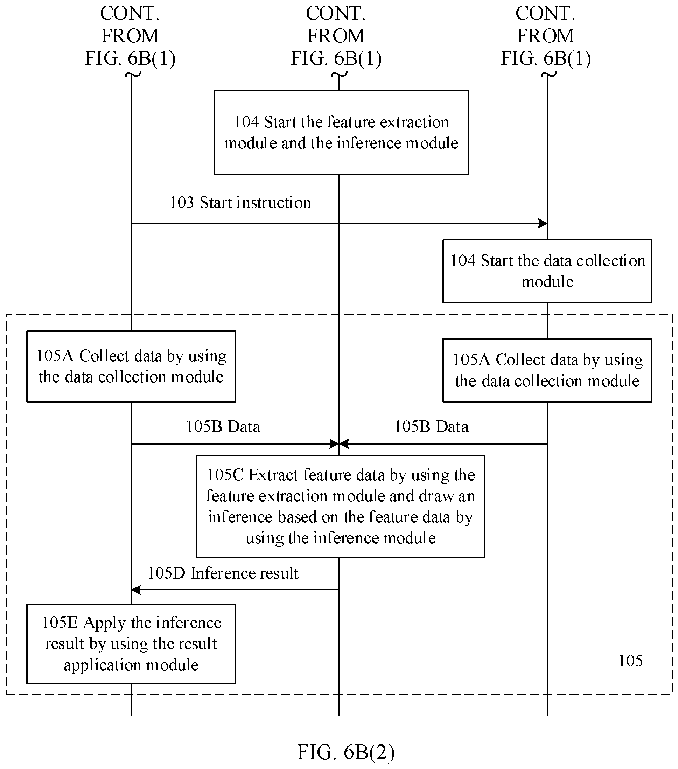

FIG. 6A, FIG. 6B(1), and FIG. 6B(2) are schematic flowcharts of a method example 1 useful for understanding the invention and that may be applied to the communications system 100 shown in FIG. 1 or FIG. 3.

S101. When determining to deploy a second service, an active apparatus deploys each function module for the second service.

The active apparatus may specifically perform step S101 when detecting an operation used to instruct to deploy the second service or receiving an instruction used to instruct to deploy the second service. During specific implementation, an administrator may perform an operation by using an operation interface of the active apparatus, to instruct to install an application used to implement the second service, and the active apparatus performs step S 101 when detecting the operation.

In step S101, the active apparatus may send a deployment instruction to an apparatus that needs to deploy each function module, to instruct the apparatus to deploy a corresponding function module. The deployment instruction includes an installation package of a to-be-deployed function module. It should be noted that, the apparatus that needs to deploy each function module for the second service includes at least a standby apparatus. For ease of description, function modules deployed on the standby apparatus are collectively referred to as a first function module. The first function module is configured to process data of the second service. The data of the second service may be collected raw data, or may be intermediate data obtained after preliminary processing, for example, feature data. For an AI service, in different deployment manners, the first function module includes an inference module, a feature extraction module and optionally a result application module. When only the inference module is included, the data of the second service refers to the feature data. When the feature extraction module is further included, the data of the second service refers to the collected raw data.

If some function modules need to be deployed on the active apparatus, the active apparatus may directly deploy the function modules on the active apparatus, in other words, directly install installation packages of the function modules.

In an implementation, each function module may be deployed, according to a preset correspondence between an identifier of each function module for the second service and an apparatus identifier, on an apparatus identified by a corresponding apparatus identifier.

The following uses an example in which function modules for an AI service 1 and an AI service 2 are deployed on the network device shown in FIG. 3 for description. An MPU and an LPU are data sources of the AI service 1, and an inference result is used for the first service running on an active MPU. An LPU is a data source of the AI service 2, and an inference result needs to be sent to an apparatus outside the communications system.

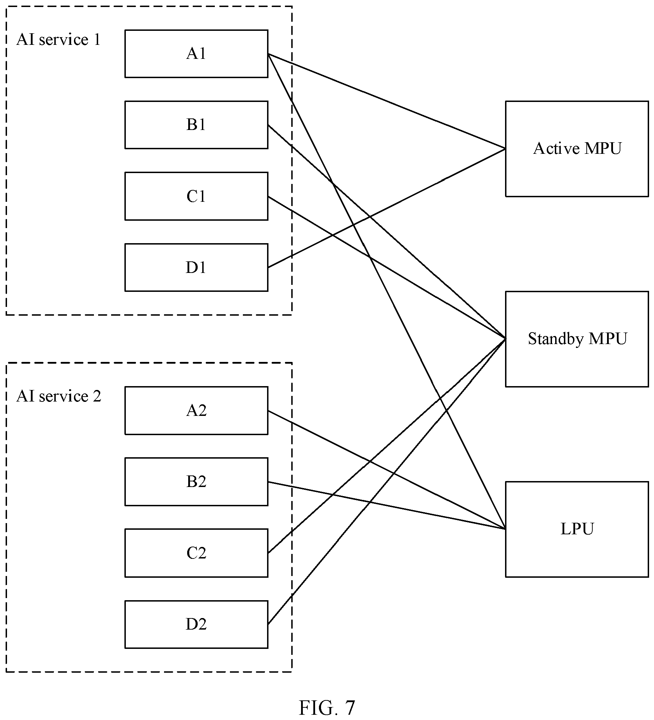

As shown in FIG. 7, the AI service 1 includes a data collection module A1, a feature extraction module B 1, an inference module C1, and a result application module D 1, and a correspondence shown in Table 1 is established. The AI service 2 includes a data collection module A2, a feature extraction module B2, an inference module C2, and a result application module D2, and a correspondence shown in Table 2 is established.

An identifier of a function module may be specifically a process name of the function module.

**Table 1**

| Identifier of each function module of the AI service 1 | Apparatus identifier |
|---|---|
| A1 | LPU identifier 1; ...; LPU identifier n; active MPU identifier |
| B1 | Standby MPU identifier |
| C1 | Standby MPU identifier |
| D1 | Active MPU identifier |

**Table 2**

| Identifier of each function module of the AI service 2 | Apparatus identifier |
|---|---|
| A2 | LPU identifier 1; ...; LPU identifier n |
| B2 | LPU identifier 1; ...; LPU identifier n |
| C2 | Standby MPU identifier |
| D2 | Standby MPU identifier |

In another implementation, each function module may be deployed, according to a preset correspondence between a function module type and an apparatus identifier, on an apparatus identified by a corresponding apparatus identifier. For example, for each AI service, the data collection module and the feature extraction module are deployed on an apparatus that needs to collect data required by the AI service, and the inference module and the result application module are deployed on a standby MPU.

As shown in FIG. 6B(1) and FIG. 6B(2), the active MPU determines to deploy the AI service 1, deploys a data collection module and a result application module locally, and sends a deployment instruction carrying an installation package of a data collection module to each LPU, and a deployment instruction carrying installation packages of a feature extraction module and an inference module to the standby MPU.

It should be noted that, when a plurality of function modules are deployed on a same apparatus, for example, the data collection module and the feature extraction module are deployed on a same apparatus (such as an LPU), or the feature extraction module and the inference module are deployed on a same apparatus (such as a standby MPU), the plurality of function modules may each correspond to one installation package, or may correspond to one overall installation package. In addition, the plurality of function modules may be a plurality of independent function modules, or may be a plurality of submodules of one function module.

S102. An apparatus that receives the deployment instruction deploys a corresponding function module according to the received deployment instruction.

Specifically, the apparatus installs the corresponding function module based on the installation package in the received deployment instruction.

As shown in FIG. 6B(1) and FIG. 6B(2), the standby MPU installs the feature extraction module and the inference module according to the received deployment instruction, and the LPU installs the data collection module according to the received deployment instruction.

S103. When determining to start the second service, the active apparatus starts each function module for the second service.

The active apparatus may perform step S103 when detecting an operation used to instruct to run the second service or receiving an instruction used to instruct to run the second service. During specific implementation, an administrator may perform, by using an operation interface of the active apparatus, an operation to start an application for the second service, and the active apparatus performs step S103 when detecting the operation.

In step S103, the active apparatus may send a start instruction to an apparatus that deploys each function module, to instruct the apparatus to start a corresponding function module. The start instruction includes an identifier of a to-be-started function module.

The active apparatus may specifically generate, according to the correspondences shown in Table 1 and Table 2, a start instruction used to start a corresponding function module.

If some function modules are deployed on the active apparatus, the active apparatus directly starts the function modules on the active apparatus.

As shown in FIG. 6B(1) and FIG. 6B(2), the active MPU starts the data collection module and the result application module that are deployed on the local apparatus, and sends a start instruction carrying a data collection module identifier (A1) to each LPU, and a start instruction carrying a feature extraction module identifier (B1) and an inference module identifier (C1) to the standby MPU.

It should be noted that, as described in step 101, when a plurality of function modules are deployed on the same apparatus, if the plurality of function modules are a plurality of independent function modules, the start instruction for starting the plurality of function modules may include respective identifiers of the plurality of function modules. If the plurality of function modules are a plurality of submodules of one function module (referred to as a function module 1), the start instruction for starting the plurality of function modules may include an identifier of the function module 1.

S104. An apparatus that receives the start instruction starts a corresponding function module according to the received start instruction.

Specifically, the apparatus starts a corresponding function module according to the identifier of the function module in the received start instruction.

As shown in FIG. 6B(1) and FIG. 6B(2), the standby MPU starts the feature extraction module and the inference module according to the feature extraction module identifier and the inference module identifier that are carried in the received start instruction, and the LPU starts the data collection module according to the data collection module identifier carried in the received start instruction.

The feature extraction module is configured to extract a feature of the data collected by the data collection module. Therefore, the data collection module is a data producer, and the feature extraction module is a data consumer. In the startup process, the feature extraction module may further subscribe to the data required by the second service. Specifically, there are two subscription manners: In one manner, a configuration file is used to statically define a data requirement (a condition met by the data required by the second service) between the data producer and the data consumer. In the other manner, the data consumer requests, from the data producer, to obtain data that meets a specified condition through a dynamic application programming interface (API). The subscription operations in both manners may be performed in an initialization phase after the module starts to run.

Correspondingly, the data collection module generates a subscription table that includes the feature extraction module identifier and the condition met by the data required by the second service, and sends the collected data to the corresponding feature extraction module based on information in the subscription table.

It should be noted that different second services may have respective data collection modules for the services, or may share a data collection module. For a manner in which the data collection module is shared, the data collection module needs to separately collect data required by different second services, and therefore, the feature extraction module for each second service usually needs to subscribe to the data required by the service from the data collection module.

S105. Each apparatus runs the started function module to implement the second service.

As shown in FIG. 6B(1) and FIG. 6B(2), step S105 may specifically include steps S105A to S105E.

S105A and S105B. The active MPU and each LPU collect, by using respectively deployed data collection modules, data required by the second service, and send the collected data to the standby MPU.

S105C and S105D. The standby MPU extracts a feature of the received data by using the feature extraction module to obtain feature data, draws an inference based on the feature data by using the inference module, and sends an inference result to the active MPU.

S105E. The active MPU applies the received inference result by using the result application module.

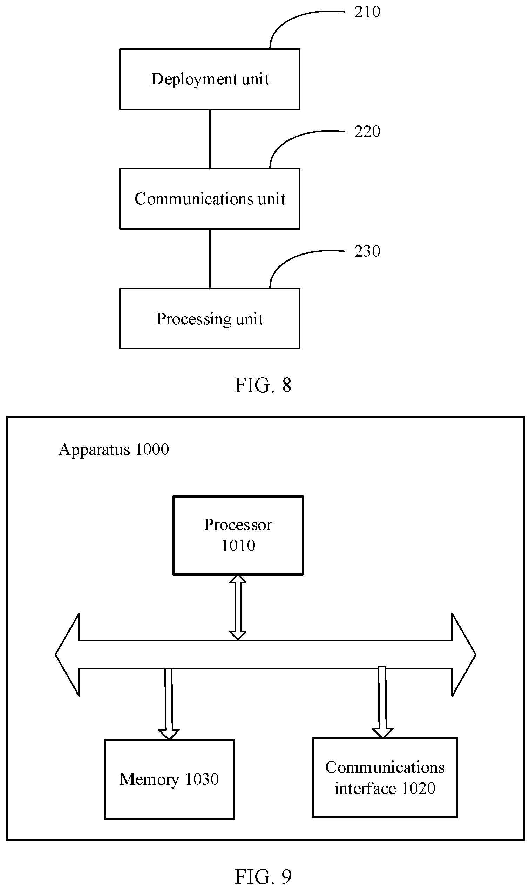

If the function modules for the second service are deployed in an active/standby deployment manner, when the roles of the active apparatus and the standby apparatus are to be switched, the original active apparatus starts a standby function module deployed on the local apparatus, and the original standby apparatus may synchronize the received data (such as raw data and feature data) to the original active apparatus, and indicate an apparatus (such as an LPU) that sends the data of the second service to the original standby apparatus to send the data to the original active apparatus. If some function modules (such as the result application module) for the second service are also started on the original active apparatus, the original standby apparatus starts corresponding standby function modules on the local apparatus. As shown in FIG. 8, the apparatus 200 includes a deployment unit 210 and a communications unit 220 according to an example 2.

When the apparatus 200 serves as an active apparatus for a first service, the apparatus 200 may further include a processing unit 230. The function units may be configured to perform the operations performed by the active apparatus 110A in the method described above. 4- The communications unit 220 is configured to communicate with another apparatus (such as a standby apparatus for the first service). The processing unit 230 is configured to process the first service. The deployment unit 210 is configured to deploy each function module for a second service by performing step 101, and start each function module by performing step 102. For example, for a function module that needs to be deployed on another apparatus (such as a standby apparatus for the first service), the deployment unit 210 uses the communications unit 220 to send a deployment instruction to the apparatus, to instruct the apparatus to deploy the function module, and uses the communications unit 220 to send a start instruction to the apparatus, to instruct the apparatus to start the function module. In addition, if there is a function module that needs to be deployed on the apparatus 200, the deployment unit 210 is further configured to directly deploy the function module on the apparatus 200, and directly start the function module. A function module (also referred to as a first function module) deployed on the standby apparatus is configured to process data of the second service for the standby apparatus.

When the apparatus 200 serves as a standby apparatus for the first service, the function units described in Embodiment 2 of the present invention may be configured to perform the operations performed by the standby apparatus 110B in the method described in example 1. The communications unit 220 is configured to communicate with another apparatus (such as an active apparatus for the first service). For example, the communications unit 220 is configured to receive a deployment instruction and a start instruction that are sent by the active apparatus for the first service. The deployment instruction is used to instruct the standby apparatus to deploy some or all of function modules (also referred to as a first function module) for a second service. The start instruction is used to instruct to start the first function module. The deployment unit 210 is configured to deploy the first function module according to the deployment instruction, and start the first function module according to the start instruction. The first function module is configured to process data of the second service.

According to example 1, example 3 of the present invention provides an apparatus 1000 for implementing service function deployment. The apparatus 1000 may be specifically an MPU. As shown in FIG. 9, the apparatus 1000 includes a processor 1010 and a communications interface 1020, and may further include a memory 1030. The processor 1010, the communications interface 1020, and the memory 1030 may communicate with each other by using a bus.

The processor 1010 may be specifically a central processing unit (CPU) or an application-specific integrated circuit (ASIC), or may be configured as one or more integrated circuits that implement this embodiment of the present invention.

The memory 1030 may be specifically a high-speed random access memory (RAM), or may be a nonvolatile memory.

When the apparatus 1000 serves as an active apparatus (such as an active MPU) for a first service, the processor 1010 is configured to perform the operations performed by the active apparatus 110A in the method described in Embodiment 1. Specifically, the operations may be performed by executing computer operation instructions stored in the memory 1030. The communications interface 1020 is configured to communicate with another apparatus (such as a standby apparatus for the first service).

When the apparatus 1000 serves as a standby apparatus (such as a standby MPU) for the first service, the processor 1010 is configured to perform the operations performed by the standby apparatus 110B in the method described in Embodiment 1. Specifically, the operations may be performed by executing computer operation instructions stored in the memory 1030. The communications interface 1020 is configured to communicate with another apparatus (such as an active apparatus for the first service).

## Claims

1. A system (100) for implementing service function deployment, wherein the system comprises an active apparatus (110A) and a standby apparatus (110B) for a first service; wherein
the active apparatus (110A) is configured to process the first service and deploy a first function module for a second service on the standby apparatus, wherein the second service is an artificial intelligence, AI, service; and
the standby apparatus (110B) is configured to process data of the second service by using the first function module,
wherein the first function module comprises an inference module; and
the standby apparatus (110B) is specifically configured to draw an inference based on feature data of the second service by using the inference module, to obtain an inference result,
wherein the active apparatus is further configured to deploy a feature extraction module for the second service on the active apparatus;
the active apparatus (110A) is further configured to extract a feature of raw data of the second service by using the feature extraction module, to obtain the feature data, and send the feature data to the standby apparatus; and
the standby apparatus (110B) is configured to receive the feature data from the active apparatus and draw, by using the inference module, an inference based on the feature data received from the active apparatus.

2. The system (100) according to claim 1, wherein the first function module further comprises a feature extraction module; and
the standby apparatus (110B) is specifically configured to extract a feature of raw data of the second service by using the feature extraction module, to obtain the feature data, and draw, by using the inference module, an inference based on the feature data obtained by the feature extraction module.

3. The system (100) according to claim 1, wherein the active apparatus is further configured to deploy a data collection module for the second service on the active apparatus; and
the active apparatus (110A) is further configured to collect the raw data of the second service by using the data collection module.

4. The system (100) according to any one of claims 1 to 3, wherein
the active apparatus (110A) is further configured to deploy a result application module for the second service on the active apparatus;
the standby apparatus (110B) is further configured to send the inference result to the active apparatus; and
the active apparatus (110A) is further configured to receive the inference result from the standby apparatus, and apply the inference result by using the result application module.

5. The system (100) according to any one of claims 1 to 3, wherein the first function module further comprises a result application module; and
the standby apparatus (110B) is further configured to apply the inference result by using the result application module.

6. The system (100) according to any one of claims 1 to 5, wherein the system is specifically a network device, and the network device comprises a plurality of main processing units, MPUs, wherein the active apparatus is specifically an active MPU, and the standby apparatus is specifically a standby MPU.

7. The system (100) according to claim 6, wherein the network device further comprises a line processing unit, LPU;
the active MPU is further configured to deploy a data collection module for the second service and a feature extraction module for the second service on the LPU; and
the LPU is configured to: collect data of the second service by using the data collection module, extract, by using the feature extraction module, a feature of the data collected by the data collection module to obtain feature data, and send the feature data to the standby MPU.

8. A method for implementing service function deployment, wherein the method is performed by an active apparatus for a first service and comprises:
processing the first service; and
deploying (101, 102) a first function module for a second service on a standby apparatus for the first service, wherein the first function module is configured to process data of the second service, wherein the second service is an artificial intelligence, AI, service,
wherein the first function module comprises an inference module, and the inference module is configured to draw an inference based on feature data of the second service to obtain an inference result,
wherein the method further comprises:
deploying a feature extraction module for the second service on the active apparatus; and
extracting a feature of raw data of the second service by using the feature extraction module to obtain the feature data, and sending the feature data to the standby apparatus.

9. The method according to claim 8, wherein the first function module further comprises a feature extraction module, wherein the feature extraction module is configured to extract a feature of raw data of the second service to obtain the feature data, and the inference module is specifically configured to draw an inference based on the feature data obtained by the feature extraction module.

10. The method according to claim 8, wherein the active apparatus is specifically an active main processing unit, MPU, in a network device, the standby apparatus is specifically a standby MPU in the network device, and the network device further comprises a line processing unit, LPU; and the method further comprises:
deploying a data collection module for the second service and a feature extraction module for the second service on the LPU, wherein the data collection module is configured to collect data of the second service, and the feature extraction module is configured to extract a feature of the data collected by the data collection module to obtain the feature data of the second service.

11. An apparatus (200) for implementing the method according to any one of claims 8 to 10 for implementing service function deployment.

12. A computer program product comprising instructions which, when the program is executed by a computer, cause the computer to carry out the steps of the method according to any one of claims 8 to 10.

13. A computer-readable storage medium comprising instructions which, when executed by a computer, cause the computer to carry out the steps of the method according to any one of claims 8 to 10.

## Patentansprüche

1. System (100) zum Implementieren einer Inbetriebnahme einer Dienstfunktion, wobei das System eine aktive Einrichtung (110A) und eine Standby-Einrichtung (110B) für einen ersten Dienst umfasst; wobei
die aktive Einrichtung (110A) konfiguriert ist, um den ersten Dienst zu verarbeiten und ein erstes Funktionsmodul für einen zweiten Dienst auf der Standby-Einrichtung in Betrieb zu nehmen, wobei der zweite Dienst ein Dienst einer künstlichen Intelligenz, AI, ist; und
die Standby-Einrichtung (110B) konfiguriert ist, um Daten des zweiten Dienstes durch Verwenden des ersten Funktionsmoduls zu verarbeiten,
wobei das erste Funktionsmodul ein Inferenzmodul umfasst; und
die Standby-Einrichtung (110B) speziell konfiguriert ist, um eine Inferenz basierend auf Merkmalsdaten des zweiten Dienstes durch Verwenden des Inferenzmoduls zu ziehen, um ein Inferenzergebnis zu erhalten,
wobei die aktive Einrichtung ferner konfiguriert ist, um ein Merkmalsextraktionsmodul für den zweiten Dienst auf der aktiven Einrichtung in Betrieb zu nehmen;
die aktive Einrichtung (110A) weiterhin konfiguriert ist, um ein Merkmal von Rohdaten des zweiten Dienstes durch Verwenden des Merkmalsextraktionsmoduls zu extrahieren, um die Merkmalsdaten zu erhalten, und die Merkmalsdaten an die Standby-Einrichtung zu senden; und
die Standby-Einrichtung (110B) konfiguriert ist, um die Merkmalsdaten von der aktiven Einrichtung zu empfangen und durch Verwenden des Inferenzmoduls eine Inferenz basierend auf den Merkmalsdaten, die von der aktiven Einrichtung empfangen werden, zu ziehen.

2. System (100) nach Anspruch 1, wobei das erste Funktionsmodul ferner ein Merkmalsextraktionsmodul umfasst; und
die Standby-Einrichtung (110B) speziell konfiguriert ist, um ein Merkmal von Rohdaten des zweiten Dienstes durch Verwenden des Merkmalsextraktionsmoduls zu extrahieren, um die Merkmalsdaten zu erhalten, und durch Verwenden des Inferenzmoduls eine Inferenz basierend auf den Merkmalsdaten, die durch das Merkmalsextraktionsmodul erhalten werden, zu ziehen.

3. System (100) nach Anspruch 1, wobei die aktive Einrichtung ferner konfiguriert ist, um ein Datensammelmodul für den zweiten Dienst auf der aktiven Einrichtung in Betrieb zu nehmen; und
die aktive Einrichtung (110A) ferner konfiguriert ist, um die Rohdaten des zweiten Dienstes durch Verwenden des Datensammelmoduls zu sammeln.

4. System (100) nach einem der Ansprüche 1 bis 3, wobei
die aktive Einrichtung (110A) ferner konfiguriert ist, um ein Ergebnisanwendungsmodul für den zweiten Dienst auf der aktiven Einrichtung in Betrieb zu nehmen;
die Standby-Einrichtung (110B) ferner konfiguriert ist, um das Inferenzergebnis an die aktive Einrichtung zu senden; und
die aktive Einrichtung (110A) ferner konfiguriert ist, um das Inferenzergebnis von der Standby-Einrichtung zu empfangen, und
das Inferenzergebnis durch Verwenden des Ergebnisanwendungsmoduls anzuwenden.

5. System (100) nach einem der Ansprüche 1 bis 3, wobei das erste Funktionsmodul ferner ein Ergebnisanwendungsmodul umfasst; und
die Standby-Einrichtung (110B) ferner konfiguriert ist, um das Inferenzergebnis durch Verwenden des Ergebnisanwendungsmoduls anzuwenden.

6. System (100) nach einem der Ansprüche 1 bis 5, wobei das System speziell eine Netzwerkvorrichtung ist, und die Netzwerkvorrichtung eine Vielzahl von Hauptverarbeitungseinheiten, MPUs, umfasst, wobei die aktive Einrichtung speziell eine aktive MPU ist und die Standby-Einrichtung speziell eine Standby-MPU ist.

7. System (100) nach Anspruch 6, wobei die Netzwerkvorrichtung ferner eine Leitungsverarbeitungseinheit, LPU, umfasst;
die aktive MPU ist ferner konfiguriert, um ein Datensammelmodul für den zweiten Dienst und ein Merkmalsextraktionsmodul für den zweiten Dienst auf der LPU in Betrieb zu nehmen; und
die LPU konfiguriert ist zum: Sammeln von Daten des zweiten Dienstes durch Verwenden des Datensammelmoduls, Extrahieren, durch Verwenden des Merkmalsextraktionsmoduls, eines Merkmals der Daten, die durch das Datensammelmodul gesammelt werden, um Merkmalsdaten zu erhalten, und Senden der Merkmalsdaten an die Standby-MPU.

8. Verfahren zum Implementieren der Inbetriebnahme einer Dienstfunktion, wobei das Verfahren durch eine aktive Einrichtung für einen ersten Dienst durchgeführt wird und umfasst:
Verarbeiten des ersten Dienstes; und
In Betrieb nehmen (101, 102) eines ersten Funktionsmoduls für einen zweiten Dienst auf einer Standby-Einrichtung für den ersten Dienst, wobei das erste Funktionsmodul konfiguriert ist, um Daten des zweiten Dienstes zu verarbeiten, wobei der zweite Dienst ein Dienst der künstlichen Intelligenz, AI, ist,
wobei das erste Funktionsmodul ein Inferenzmodul umfasst, und das Inferenzmodul konfiguriert ist, um eine Inferenz basierend auf Merkmalsdaten des zweiten Dienstes zu ziehen, um ein Inferenzergebnis zu erhalten,
wobei das Verfahren ferner umfasst:
In Betrieb nehmen eines Merkmalsextraktionsmoduls für den zweiten Dienst auf der aktiven Einrichtung; und
Extrahieren eines Merkmals von Rohdaten des zweiten Dienstes durch Verwenden des Merkmalsextraktionsmoduls, um die Merkmalsdaten zu erhalten, und Senden der Merkmalsdaten an die Standby-Einrichtung.

9. Verfahren nach Anspruch 8, wobei das erste Funktionsmodul ferner ein Merkmalsextraktionsmodul umfasst, wobei das Merkmalsextraktionsmodul konfiguriert ist, um ein Merkmal von Rohdaten des zweiten Dienstes zu extrahieren, um die Merkmalsdaten zu erhalten, und das Inferenzmodul speziell konfiguriert ist, um eine Inferenz basierend auf den Merkmalsdaten, die durch das Merkmalsextraktionsmodul erhalten werden, zu ziehen.

10. Verfahren nach Anspruch 8, wobei die aktive Einrichtung speziell eine aktive Hauptverarbeitungseinheit, MPU, in einer Netzwerkvorrichtung ist, die Standby-Einrichtung speziell eine Standby-MPU in der Netzwerkvorrichtung ist und die Netzwerkvorrichtung ferner eine Leitungsverarbeitungseinheit, LPU, umfasst; und das Verfahren ferner umfasst:
In Betrieb nehmen eines Datensammelmoduls für den zweiten Dienst und eines Merkmalsextraktionsmoduls für den zweiten Dienst auf der LPU, wobei das Datensammelmodul konfiguriert ist, um Daten des zweiten Dienstes zu sammeln, und das Merkmalsextraktionsmodul konfiguriert ist, um ein Merkmal der Daten, die durch das Datensammelmodul gesammelt werden, zu extrahieren, um die Merkmalsdaten des zweiten Dienstes zu erhalten.

11. Einrichtung (200) zum Implementieren des Verfahrens nach einem der Ansprüche 8 bis 10 zum Implementieren der Inbetriebnahme einer Dienstfunktion.

12. Computerprogrammprodukt, das Anweisungen umfasst, die, wenn das Programm durch einen Computer ausgeführt wird, den Computer veranlassen, das Verfahren nach einem der Ansprüche 8 bis 10 vorzunehmen.

13. Computerlesbares Speichermedium, das Anweisungen umfasst, die, wenn sie durch einen Computer ausgeführt werden, den Computer veranlassen, die Schritte des Verfahrens nach einem der Ansprüche 8 bis 10 vorzunehmen.

## Revendications

1. Système (100) permettant de mettre en oeuvre un déploiement de fonction de service, dans lequel le système comprend un appareil actif (110A) et un appareil en attente (110B) pour un premier service ; dans lequel
l'appareil actif (110A) est configuré pour traiter le premier service et déployer un premier module de fonction pour un second service sur l'appareil en attente, dans lequel le second service est un service d'intelligence artificielle, IA ; et
l'appareil en attente (110B) est configuré pour traiter des données du second service à l'aide du premier module de fonction,
dans lequel le premier module de fonction comprend un module d'inférence ; et l'appareil en attente (110B) est particulièrement configuré pour établir une inférence sur la base des données de caractéristiques du second service à l'aide du module d'inférence, afin d'obtenir un résultat d'inférence,
dans lequel l'appareil actif est en outre configuré pour déployer un module d'extraction de caractéristiques pour le second service sur l'appareil actif ;
l'appareil actif (110A) est en outre configuré pour extraire une caractéristique de données brutes du second service à l'aide du module d'extraction de caractéristiques, pour obtenir les données de caractéristiques et pour envoyer les données de caractéristiques à l'appareil en attente ; et
l'appareil en attente (110B) est configuré pour recevoir les données de caractéristiques en provenance de l'appareil actif et établir, à l'aide du module d'inférence, une inférence basée sur les données de caractéristiques reçues en provenance de l'appareil actif.

2. Système (100) selon la revendication 1, dans lequel le premier module de fonction comprend en outre un module d'extraction de caractéristiques ; et
l'appareil en attente (110B) est particulièrement configuré pour extraire une caractéristique de données brutes du second service à l'aide du module d'extraction de caractéristiques, pour obtenir les données de caractéristiques et pour établir, à l'aide du module d'inférence, une conclusion basée sur les données de caractéristiques obtenues par le module d'extraction de caractéristiques.

3. Système (100) selon la revendication 1, dans lequel l'appareil actif est en outre configuré pour déployer un module de collecte de données pour le second service sur l'appareil actif ; et
l'appareil actif (110A) est en outre configuré pour collecter les données brutes du second service à l'aide du module de collecte de données.

4. Système (100) selon l'une quelconque des revendications 1 à 3, dans lequel l'appareil actif (110A) est en outre configuré pour déployer un module d'application de résultat pour le second service sur l'appareil actif ;
l'appareil en attente (110B) est en outre configuré pour envoyer le résultat d'inférence à l'appareil actif ; et
l'appareil actif (110A) est en outre configuré pour recevoir le résultat d'inférence en provenance de l'appareil en attente, et
appliquer le résultat d'inférence à l'aide du module d'application de résultat.

5. Système (100) selon l'une quelconque des revendications 1 à 3, dans lequel le premier module de fonction comprend en outre un module d'application de résultat ; et l'appareil en attente (110B) est en outre configuré pour appliquer le résultat d'inférence à l'aide du module d'application de résultat.

6. Système (100) selon l'une quelconque des revendications 1 à 5, dans lequel le système est particulièrement un dispositif de réseau, et le dispositif de réseau comprend une pluralité d'unités de traitement principales, MPU, dans lequel l'appareil actif est particulièrement une MPU active, et l'appareil en attente est particulièrement une MPU en attente.

7. Système (100) selon la revendication 6, dans lequel le dispositif de réseau comprend en outre une unité de traitement de ligne, LPU ;
la MPU active est en outre configurée pour déployer un module de collecte de données pour le second service et un module d'extraction de caractéristiques pour le second service sur la LPU ; et
la LPU est configurée pour : collecter des données du second service à l'aide du module de collecte de données, extraire, à l'aide du module d'extraction de caractéristiques, une caractéristique des données collectées par le module de collecte de données afin d'obtenir des données de caractéristiques, et envoyer les données de caractéristiques à la MPU en attente.

8. Procédé permettant de mettre en oeuvre un déploiement de fonction de service, dans lequel le procédé est effectué par un appareil actif pour un premier service et comprend :
le traitement du premier service ; et
le déploiement (101, 102) d'un premier module de fonction pour un second service sur un appareil en attente pour le premier service, dans lequel le premier module de fonction est configuré pour traiter des données du second service, dans lequel le second service est un service d'intelligence artificielle, lA,
dans lequel le premier module de fonction comprend un module d'inférence, et le module d'inférence est configuré pour établir une inférence sur la base de données de caractéristiques du second service afin d'obtenir un résultat d'inférence,
dans lequel le procédé comprend en outre :
le déploiement d'un module d'extraction de caractéristiques pour le second service sur l'appareil actif ; et
l'extraction d'une caractéristique de données brutes du second service à l'aide du module d'extraction de caractéristiques pour obtenir les données de caractéristiques, et l'envoi des données de caractéristiques à l'appareil en attente.

9. Procédé selon la revendication 8, dans lequel le premier module de fonction comprend en outre un module d'extraction de caractéristiques, dans lequel le module d'extraction de caractéristiques est configuré pour extraire une caractéristique de données brutes du second service afin d'obtenir les données de caractéristiques, et le module d'inférence est particulièrement configuré pour établir une inférence sur la base des données de caractéristiques obtenues par le module d'extraction de caractéristiques.

10. Procédé selon la revendication 8, dans lequel l'appareil actif est particulièrement une unité de traitement principale, MPU active dans un dispositif de réseau, l'appareil en attente est particulièrement une MPU en attente dans le dispositif de réseau, et le dispositif de réseau comprend en outre une unité de traitement de ligne, LPU ; et le procédé comprend en outre :
le déploiement d'un module de collecte de données pour le second service et un module d'extraction de caractéristiques pour le second service sur la LPU, dans lequel le module de collecte de données est configuré pour collecter des données du second service et le module d'extraction de caractéristiques est configuré pour extraire une caractéristique des données collectées par le module de collecte de données afin d'obtenir les données de caractéristiques du second service.

11. Appareil (200) permettant de mettre en oeuvre le procédé selon l'une quelconque des revendications 8 à 10 afin de mettre en oeuvre le déploiement de fonction de service.

12. Produit-programme informatique comprenant des instructions qui, lorsque le programme est exécuté par un ordinateur, amènent l'ordinateur à réaliser les étapes du procédé selon l'une quelconque revendication 8 à 10.

13. Support de stockage lisible par ordinateur, comprenant des instructions qui, lorsqu'elles sont exécutées par un ordinateur, amènent l'ordinateur à réaliser les étapes du procédé selon l'une quelconque des revendications 8 à 10.
